Europäisches Patentamt

**European Patent Office**

Office européen des brevets

(19)

(11) Veröffentlichungsnummer: **0 264 075**
**A1**

(12) **EUROPÄISCHE PATENTANMELDUNG**

(21) Anmeldenummer: **87114746.8**

(22) Anmeldetag: **09.10.87**

(51) Int. Cl.⁴: **B65G 47/28**

(30) Priorität: **13.10.86 DE 3634807**

(43) Veröffentlichungstag der Anmeldung:
**20.04.88 Patentblatt 88/16**

(84) Benannte Vertragsstaaten:
**AT BE CH DE ES FR GB GR IT LI LU NL SE**

(71) Anmelder: **Chemaperm GmbH**
**Am Buddenberg 18**
**D-4714 Selm(DE)**

(72) Erfinder: **Spodig, Dieter, Dipl.-Kfm.**
**Mühlenstrasse 46**
**D-4717 Nordkirchen(DE)**

(74) Vertreter: **Henfling, Fritz, Dipl.-Ing. et al**
**Beurhausstrasse 7**
**D-4600 Dortmund 1(DE)**

(54) **Förderstrecke mit Trenn- und Staueffekt.**

(57) Nach der Erfindung wird die Trennung des Fördergutes ingestalt von Werkstücken (41) übereinstimmender Abmessungen in die Förderstrecke (F) verlagert, über deren Länge zu diesem Zweck in Abständen Paare von gegeneinander schwenkbaren Backen (261/262, 261'/ 262'....) angeordnet sind, die jeweils ein einlaufendes Werkstück (41) zwischen sich aufnehmen, von dem sie in Sperrposition für das folgende Werkstück (41) verschwenkt werden, aus welcher Position sie erst zurückverschwenken, wenn der Weitertransport des von ihnen gehaltenen Werkstücks (41) entweder durch die auslaufseitige Sperre (13) oder aber durch das jeweils davorliegende Backenpaar (261/262.....) freigegeben wird.

Bei dieser dann auch konstruktiv einfachen Lösung bedarf es nur noch einer auslaufseitigen Sperre.

EP 0 264 075 A1

Fig. 1

## Förderstrecke mit Trenn-und Staueffekt

Die Erfindung betrifft eine Bestandteil eines umlaufenden Förderbandes bildende, sich zwischen einem Einlauf und einem Auslauf erstreckende Förderstrecke mit Trenn-und Staueffekt für Werkstücke im wesentlichen übereinstimmender Abmessungen, mit sich über die Länge der Förderstrecke erstreckenden, als Führung für das Fördergut dienenden seitlichen Begrenzungen, mit einem der durch die seitlichen Begrenzungen gebildeten Förderbahn vorgelagerten Einlauftrichter und mit einer auslaufseitigen aufhebbaren Auslaufsperre für das Fördergut.

In bekannten Förderstrecken dieser Art wird das Fördergut in der Förderstrecke auf Block gefahren und beispielsweise über zwei auslaufseitig im Abstand voneinander vorgesehene, im Wechsel betätigte Sperren vereinzelt. Das ist konstruktiv aufwendig. Darüber hinaus bedarf es der laufenden Betätigung der auslaufseitigen Sperren auch bei anhaltender Förderung.

Ausgehend vom im Vorausgehenden umrissenen Stand der Technik liegt der Erfindung die Aufgabe zugrunde, eine solche Förderstrecke konstruktiv einfacher und so zu gestalten, daß die Sperre ausschließlich der Unterbrechung der Förderung dient.

Die Aufgabe wird bei einer gattungsgemäßen Förderstrecke durch eine Ausgestaltung entsprechend dem kennzeichnenden Teil des Patentanspruches 1 gelöst.

Die Trennung des Fördergutes erfolgt hierbei bereits beim Einlaufen des Fördergutes in die Förderstrecke. Die auslaufseitige Sperre wird dann auch nur noch zur Freigabe des Weitertransports des bereits auf Abstand befindlichen Fördergutes und zur Unterbrechung dieses Transports betätig, woraus ein vergleichsweise einfacher Steuermechanismus für die Sperre resultiert. Aus der Vereinzelung des Fördergutes bereits beim Einlauf in die Förderstrecke resultiert dann auch die Möglichkeit, eine Werkstückkontrolle durch Inaugenscheinnahme des Fördergutes in der Förderstrecke vorzunehmen.

Ausgestaltungen der Erfindung ergeben sich aus den Unteransprüchen. Eine Auswechselbarkeit der das Fördergut paarweise aufnehmenden Backen ermöglicht die Umrüstung der Förderstrecke auf anders dimensioniertes Fördergut. Wird der Förderbahn ein Magnetsystem zur Herstellung einer Wirkverbindung zwischen Förderband und Fördergut zugeordnet, ist ein hängender Transport des Fördergutes realisierbar, der insbesondere bei der Förderung von Fördergut mit vergleichsweise kleinem Querschnitt vorzuziehen ist.

In der Zeichnung ist die Erfindung anhand eines Ausführungsbeispieles weitergehend erläutert. Es zeigen:

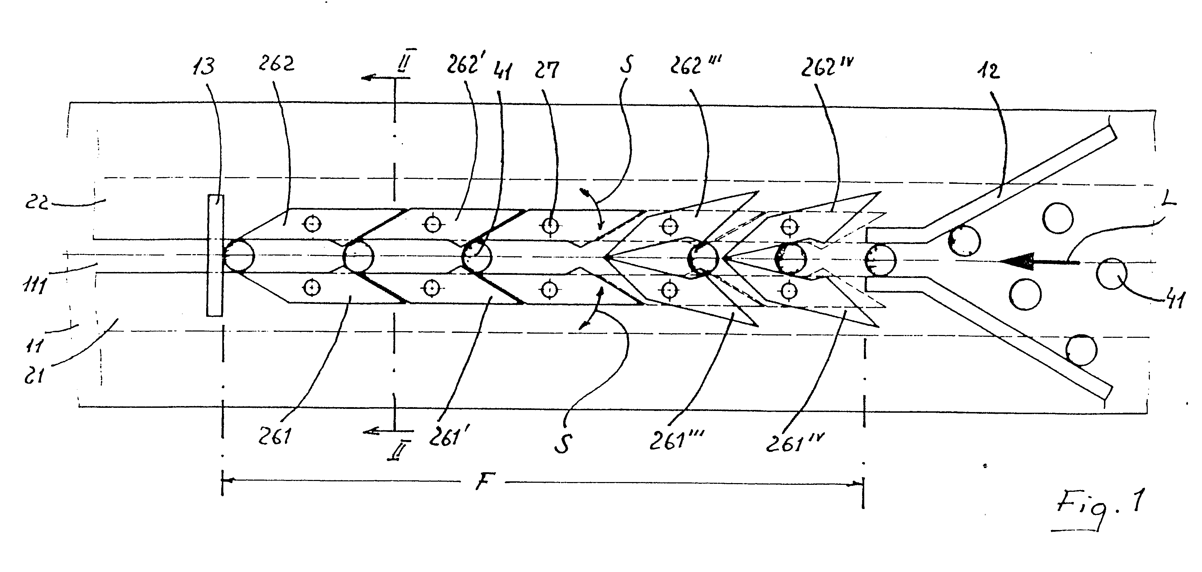

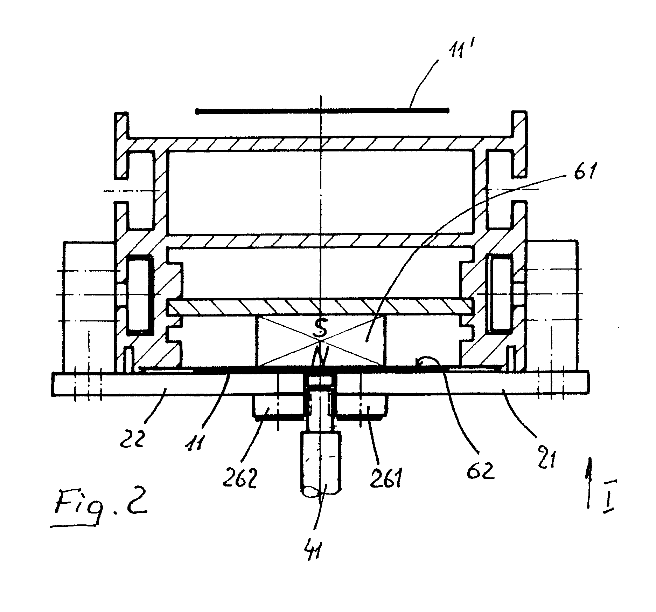

Figur 1 eine Ansicht der Förderstrecke in Richtung auf das Fördertrum (Pfeil I in Fig.2),

Figur 2 einen Schnitt durch die Förderstrecke nach Linie II-II in Fig.1,

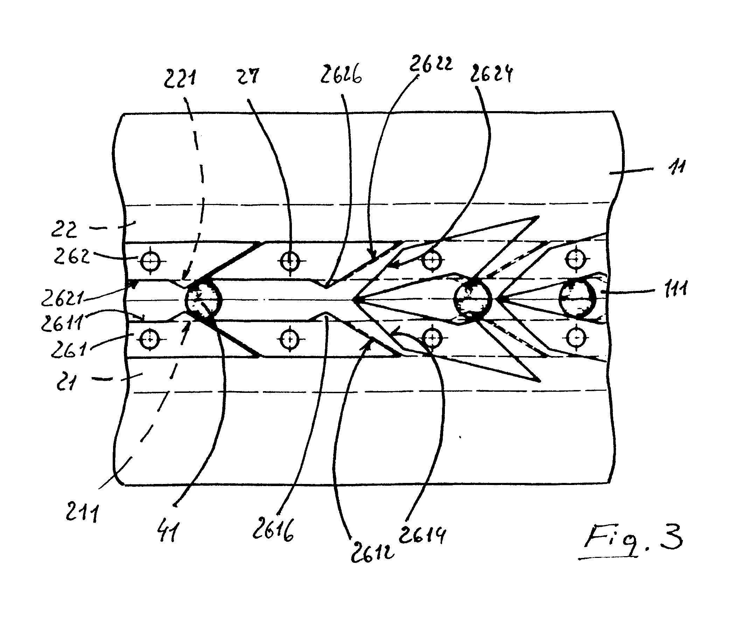

Figur 3 einen Ausschnitt aus Fig.1 in größerem Maßstab.

Die Förderstrecke F ist dem im Sinne des Pfeiles L umlaufenden Förderband 11,11', und zwar speziell dem fördernden Trum 11, zugeordnet und wird einlaufseitig begrenzt durch den Einlauftrichter 12, sowie auslaufseitig durch die aufhebbare Auslaufsperre 13.

Zur Erzielung des gewünschten Trenn-und Staueffekts sind auf den die eigentliche, auf den Durchmesser der zu fördernden Werkstücke 41 ausgelegten Förderbahn 111 einfassenden seitlichen Begrenzungsleisten 21,22 Backen 261,261'..., 262,262'... angeordnet, die paarweise Aufnahmen, z.B.261, 262, für einzelne Werkstücke 41 bilden.

Die Backen 261,261'... wie auch die Backen 262,262'... übereinstimmenden trapezförmigen Querschnitts sind ausgehend von der Auflaufsperre 13 aufeinander folgend auf von den Begrenzungsleisten 21 und 22 ausgehenden Achsen 27 im Sinne der Doppelpfeile S verschwenkbar dergestalt gelagert, daß die inneren Längsseiten, z.B.2611,2621, der Backen 261,262 mit den Führungsflächen 211,221, der Begrenzungsleisten 21,22 zum Fluchten bringbar sind und die einander zugekehrten Schmalseiten 2612 u. 2614 bzw. 2622 u. 2624 aufeinanderfolgender Backen 261,261' sowie 262,262' bei mit den Führungsflächen 211,221 der Führungsleisten 21 u. 22 fluchtenden Längsseiten, z.B.2611,2621, gegeneinander zur Anlage kommen. In dieser Lage springen am Übergang von den inneren Längsseiten, z.B.2611, der Backen z.B.261', in ihre übergabeseitigen Schmalseiten, z.B.262', vorgesehene Nasen, z.B.2616',begrenzt in die von den Begrenzungsleisten 21,22 eingefaßte Förderbahn 111 vor.

Die bei im Sinne des Pfeiles L umlaufendem Förderband 11, 11' über den Einlauftrichter 12 der Förderstrecke F zugeführten Werkstücke 41, im dargestellten Fall im wesentlichen zylindrische Werkstücke, laufen eines nach dem anderen auf das erste hinter dem Einlauftrichter 12 angeordnete Backenpaar 261$^{IV}$, 262$^{IV}$ auf, und zwar bei gestrichelt angedeuteter Lage der Backen gegen die in die Förderbahn 111 vorspringenden Nasen 2616 und 2626. Unter der Einwirkung des dagegen auflaufenden Werkstücks 41 werden die Backen in die einlaufseitig ausgezogen dargestellte Lage verschwenkt und das Werkstück 41 gelangt in den vor den Nasen liegenden Bereich, wo es gegen die inneren Längsseiten, z.B.2611,2621 der Backen 261,262 auflaufend, diese in die einlaufseitig gestrichelt dargestellte Lage zurückverschwenkt, in der die Nasen 2616 und 2626 in die Führungsbahn 111 vorspringend den Zutritt des folgenden Werkstücks 41 zur mit einem Werkstück belegten, von den Backen 261$^{IV}$ und 262$^{IV}$ gebildeten Aufnahme 261$^{IV}$, 262$^{IV}$ blockieren. Ist die folgende Aufnahme 261$^{III}$, 262$^{III}$noch unbelegt, wird das sich zunächst noch in der Aufnahme 261$^{IV}$, 262$^{IV}$ befindende Werkstück 41 in den Bereich dieser Aufnahme weitertransportiert und dementsprechend dann auch weiter in die folgenden Aufnahmen, vorausgesetzt diese sind unbelegt. Dieses Wechselspiel setzt sich fort bis bei geschlossener Auslaufsperre 13 sämtliche Aufnahmen mit Werkstücken 41 belegt sind. Wird die Auslaufsperre 13 geöffnet, werden die in der Förderstrecke F befindlichen Werkstücke 41... weitertransportiert und zwar im durch die Einlagerung in die aufeinanderfolgenden Aufnahmen vorgegebenen Abstand. Einher geht damit die Einlagerung und der Durchlauf weiterer Werkstücke 41 über den Einlauftrichter 12 in die Förderstrecke F bis der auslaufseitige Abtransport der Werkstücke 41 durch Schließen der Auslaufsperre 13 unterbrochen wird. Auf diese Weise wird sowohl ein Trenneffekt als auch im Bedarfsfall ein Staueffekt erzielt.

Beim Ausführungsbeispiel ist das fördernde Trum 11 des umlaufenden Förderbandes 11,11' von einem sich über die Länge des Trums erstreckenden Magneten bzw. Magnetsystem 61 hinterfangen. Auf diese Weise ist es - wie dargestellt, möglich - Werkstücke aus auf den Magneten 61 ansprechendem Material hängend zue transportieren. Mit 62 ist ein sogenanntes Rutschblech bezeichnet, das zwischen das Magnetsystem und das Förderbamd eingefügt ist.

## Ansprüche

1. Bestandteil eines umlaufenden Förderbandes bildende, sich zwischen einem Einlauf und einem Auslauf erstrekkende Förderstrecke mit Trenn-und Staueffekt für Werkstücke im wesentlichen übereinstimmender Abmessungen , mit sich über die Länge der Förderstrecke erstreckenden, als Führung für das Fördergut dienenden seitlichen Begrenzungen, mit einem der durch die seitlichen Begrenzungen gebildeten Förderbahn vorgelagerten Einlauftrichter und mit einer auslaufseitigen aufhebbaren Auslaufsperre für das Fördergut, dadurch gekennzeichnet, daß die seitlichen Begrenzungen (21,22) einer Höhe, die kleiner ist als die Höhe des Förderguts (41), nach der von der Förderbahn (111) abgekehrten Seite hin mit einem Überstand versehen sind, der ausgehend von der Auslaufsperre (13) von einer Mehrzahl von aufeinander folgenden, mit ihrem einlaufseitigen Ende nach außen verschwenkbar gelagerten Backen (261,261'..., 262,262'...) trapezförmigen Querschnitts gebildet wird, die auslaufseitig einen Überstand über ihre Anlenkung (27) augweisen, die am Übergang von ihrer einlaufseitigen Schmalseite (z.B.2612) in ihre innenliegende Längsseite (z.B.2611) mit einem nach innen vorspringenden Anschlag (2616) versehen sind, deren einander zugekehrten Schmalseiten (z.B.2612 u. 2614) aufeinanderfolgender Backen (z.B.261, 261') sich in ihrer nach innen verschwenkten Lage stoßen, deren einander gegenüberliegende Längsseiten (z.B.2611, 2621) einander gegenüberliegender Backen (z.B.261,262) im nach innen verschwenktem Zustand mit den Führungsflächen (211,221), der seitlichen Begrenzungen (21,22) fluchten, und die paarweise eine Aufnahme (z.B.261,262) für jeweils ein Werkstück (41) bilden.

2. Förderstrecke nach Anspruch 1, dadurch gekennzeichnet, daß der nach innen vorspringende Anschlag von einer an die Backe (z.B.261) angeformten Nase (2616) gebildet wird.

3. Förderstrecke nach Anspruch 1 oder Anspruch 2, dadurch gekennzeichnet, daß die Backen (261..., 262...) auf in die seitlichen Begrenzungen der Förderbahn (111) bildenden Leisten (21,22) sitzenden Achsen (27) gelagert sind.

4. Förderstrecke nach einem der Ansprüche 1 bis 3, gekennzeichnet durch quer zur Förderbahn (111) einstellbare Begrenzungsleisten (21,22).

5. Förderstrecke nach einem der Ansprüche 1 bis 4, gekennzeichnet durch auswechselbare Backen (261..., 262...).

6. Förderstrecke nach einem der Ansprüche 1 bis 5, dadurch gekennzeichnet, daß die Förderbahn (111) auf der vom Fördergut (41) abgekehrten Seite über ihre Länge von einem Magnetsystem (61) hinterfangen ist.

7. Förderstrecke nach Anspruch 5, dadurch gekennzeichnet, daß die Begrenzungsleisten (21,22) für die Förderbahn (111) einschließlich der die Aufnahme für das Fördergut (41) bildenden Backenpaare (261,262...) unterhalb des fördernden Trums (11) des Förderbandes (11,11') angeordnet sind und das Magnetsystem (61) oberhalb dieses Trums (11).

Fig. 1

Fig. 2

11'

61

S

N

22    11    262    261    62    21    I

41

0 264 075

Fig. 3

Europäisches Patentamt

# EUROPÄISCHER RECHERCHENBERICHT

## EINSCHLÄGIGE DOKUMENTE

EP 87114746.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 3 327 835 (WUNSCHE)<br>* Gesamt *<br>---- | 1-5 | B 65 G 47/28 |

|  |
|---|
| RECHERCHIERTE SACHGEBIETE (Int. Cl.4) |
| B 65 G |

Der vorliegende Recherchenbericht wurde für alle Patentansprüche erstellt.

| Recherchenort | Abschlußdatum der Recherche | Prüfer |
|---|---|---|
| WIEN | 24-11-1987 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82